# FASCICULE DE BREVET EUROPEEN

(11) **EP 2 661 544 B1**
(45) Date de publication et mention de la délivrance du brevet: **23.03.2016**
(21) Numéro de dépôt: 11801797.9
(22) Date de dépôt: 30.11.2011
(51) Int. Cl.: F01N 3/20, F01N 3/08

(54) **PROCÉDÉ DE RÉAMORÇAGE D'UN SYSTÈME D'INJECTION D'UN ADDITIF À L'ÉTAT LIQUIDE DANS UN SYSTÈME D'ÉCHAPPEMENT D'UN VÉHICULE AUTOMOBILE**
VERFAHREN ZUM WIEDERAUFFÜLLEN EINES SYSTEMS ZUR EINSPRITZUNG EINES FLÜSSIGEN ZUSATZMITTELS IN EINE ABGASANLAGE EINES KRAFTFAHRZEUGS
METHOD FOR REPRIMING A SYSTEM FOR INJECTING A LIQUID ADDITIVE IN AN EXHAUST SYSTEM OF A MOTOR VEHICLE

(30) Priorité: 03.01.2011 FR 1150026
(43) Date de publication de la demande: 13.11.2013
(73) Titulaire: Peugeot Citroën Automobiles SA, 78140 Vélizy Villacoublay (FR)
(72) Inventeur: LEE, Eric, F-94100 St Maur des Fosses (FR)
(74) Mandataire: Renous Chan, Véronique
(86) Numéro de dépôt international: PCT/FR2011/052824
(87) Numéro de publication internationale: WO 2012/093212

(56) Documents cités:
- WO-A1-2007/071263
- US-A1- 2010 212 303

## Description

### DOMAINE DE L'INVENTION

La présente invention revendique la priorité de la demande française 1150026 déposée le 3 janvier 2011.

La présente invention concerne un procédé de réamorçage d'un système d'injection d'un additif à l'état liquide dans un système d'échappement d'un véhicule automobile à moteur thermique. Le système d'injection selon l'invention comporte un réservoir de l'additif à l'état liquide ; un circuit hydraulique pour conduire ledit additif à l'état liquide, dudit réservoir, à un ou plusieurs injecteurs du système d'injection ; une pompe pour le pompage de l'additif à l'état liquide contenu dans ledit réservoir, dans ledit circuit hydraulique ; une vanne positionnée sur le long dudit circuit hydraulique ; et un accumulateur dudit additif à l'état liquide. L'invention concerne plus particulièrement un procédé de réamorçage d'un système d'injection dans lequel l'additif à l'état liquide comprend de l'urée.

### ART ANTERIEUR

Une diminution des émissions en oxydes d'azote (NOx) de moteurs thermiques, en particulier, de moteurs utilisant le gasoil comme carburant, peut être effectuée par réduction catalytique sélective (SCR). Cette réduction permet de transformer les NOx en dioxyde d'azote et en vapeur d'eau par adjonction d'un additif à l'état liquide.

L'additif à l'état liquide utilisé est, en pratique, un mélange d'eau et d'urée. Ce mélange est injecté, dans une plage de pression suffisante, dans la ligne d'échappement du véhicule en amont du pot catalytique.

Des systèmes d'injection d'additifs sont connus de l'art antérieur. De tels systèmes sont par exemple divulgués dans le document FR 2 942 511. Ces systèmes possèdent la particularité d'être pourvus d'un accumulateur pour stocker un volume défini d'additif à l'état liquide dans la plage de pression désirée. Des capteurs de position déterminent la position d'un piston de l'accumulateur. Le chargement de l'accumulateur est commandé en fonction de la position déterminée du piston. Ce chargement est réalisé au travers d'un circuit hydraulique, lorsque le volume utile de l'additif contenu dans l'accumulateur a été utilisé. La course du piston de l'accumulateur est définie entre une position maximale et une position minimale définie par l'utilisateur. La position minimale définit le volume de l'additif restant dans l'accumulateur au moment d'une demande de rechargement. Elle définit un volume d'additif restant appelé volume « mort ».

Un tel système de l'art antérieur permet la mise en pression et le dosage de l'additif à l'état liquide. Cependant, en fonctionnement normal, le réservoir peut ne pas comprendre d'additif en quantité suffisante, et il est possible, selon la dynamique du véhicule, que le système se désamorce. Dans un tel cas, le système aspire de l'air ce qui a pour effet de mettre celui-ci en défaut. La mise en défaut du système signifie qu'il n'est plus en mesure de charger l'accumulateur en additif.

### RESUME DE L'INVENTION

Compte tenu de ce qui précède, un problème que se propose de résoudre l'invention est de réaliser un procédé du réamorçage du système d'injection lorsque de l'air est présent dans le circuit hydraulique en amont de l'accumulateur.

Considérant le problème posé ci-dessus, la solution proposée de l'invention est un procédé de réamorçage d'un système d'injection d'un additif à l'état liquide dans un système d'échappement d'un véhicule automobile à moteur thermique, ledit système d'injection comportant
un réservoir de l'additif à l'état liquide,
un circuit hydraulique pour conduire ledit additif à l'état liquide, dudit réservoir, à un ou plusieurs injecteurs du système d'injection,
une pompe pour le pompage de l'additif à l'état liquide contenu dans ledit réservoir, dans ledit circuit hydraulique,
une vanne positionnée sur ledit circuit hydraulique, et
un accumulateur dudit additif à l'état liquide,
caractérisé en ce qu'il comprend des étapes de :
rechargement de l'accumulateur en additif à l'état liquide ;
détection de la présence d'air dans le circuit hydraulique en amont de l'accumulateur ;
arrêt du rechargement de l'accumulateur en additif à l'état liquide ;
dépressurisation du circuit hydraulique entre le réservoir et l'accumulateur ; et de
évacuation de l'air contenu dans le circuit hydraulique entre le réservoir et l'accumulateur; reprise dudit rechargement.

Ainsi, l'air contenu dans le circuit hydraulique est chassé dans le réservoir et est substitué, dans le circuit hydraulique, par de l'additif. Le réamorçage du système a donc lieu.

De manière avantageuse, - l'additif à l'état liquide comprend de l'urée ; - pour la détection de la présence d'air, on analyse la consommation électrique de la pompe ; - pour la dépressurisation du circuit, on ferme le ou les injecteurs, et on ouvre la vanne ; - l'accumulateur présente un volume mort comportant de l'additif à l'état liquide et le procédé comprend en outre une étape de substitution de l'air contenu dans le circuit hydraulique en amont de l'accumulateur par l'additif à l'état liquide contenu dans ledit volume mort et/ou l'additif à l'état liquide contenu dans le circuit hydraulique en amont de l'accumulateur ; - le système d'injection comporte en outre un capteur de position qui évalue la position du piston et commande les rechargements de l'accumulateur lorsque le piston est en position basse ; - le système d'injection comporte en outre un calculateur qui calcule le volume d'additif contenu dans le volume mort de l'accumulateur suffisant pour chasser l'air du circuit hydraulique ; - postérieurement à l'évacuation de l'air contenu dans le circuit hydraulique entre le réservoir et l'accumulateur, on recharge ledit accumulateur ; - le rechargement de l'accumulateur est effectué lors d'une dynamique de véhicule favorable au rechargement ; et - la répétition à plusieurs reprises successives dudit procédé permet de déduire une information sur le volume utile dudit liquide dans le réservoir, qui n'est pas en quantité suffisante dans le réservoir pour le rechargement.

### BREVE DESCRIPTION DES FIGURES

L'invention sera mieux comprise à la lecture de la description non limitative qui suit, rédigée au regard des dessins annexés, dans lesquels :
- la figure 1 est un schéma synoptique qui illustre des différentes étapes menant au réamorçage du système d'injection selon la présente invention ;
- la figure 2A illustre le principe de demande de rechargement de l'accumulateur dans des conditions idéales de rechargement, dans lesquelles le volume utile de l'additif à l'état liquide dans le réservoir est non nul ;
- la figure 2B représente le principe de demande de rechargement de l'accumulateur, dans le cas où la dynamique du véhicule et/ou le volume utile de l'additif à l'état liquide dans le réservoir ne sont pas favorables au chargement ;
- la figure 2C illustre une aspiration d'air lors d'une demande de rechargement ; et
- la figure 2D représente le principe de réamorçage conformément à la présente invention.

### DESCRIPTION DETAILLEE DE L'INVENTION

Le procédé selon l'invention est un procédé de réamorçage d'un système d'injection d'un additif à l'état liquide dans un système d'échappement d'un véhicule automobile à moteur thermique.

Le véhicule est par exemple un véhicule du type poids lourd dont le moteur est un moteur diesel.

L'additif à l'état liquide est notamment de l'urée associée à de l'eau. Par exemple l'additif comprend 32,5% d'urée en poids dans une solution aqueuse.

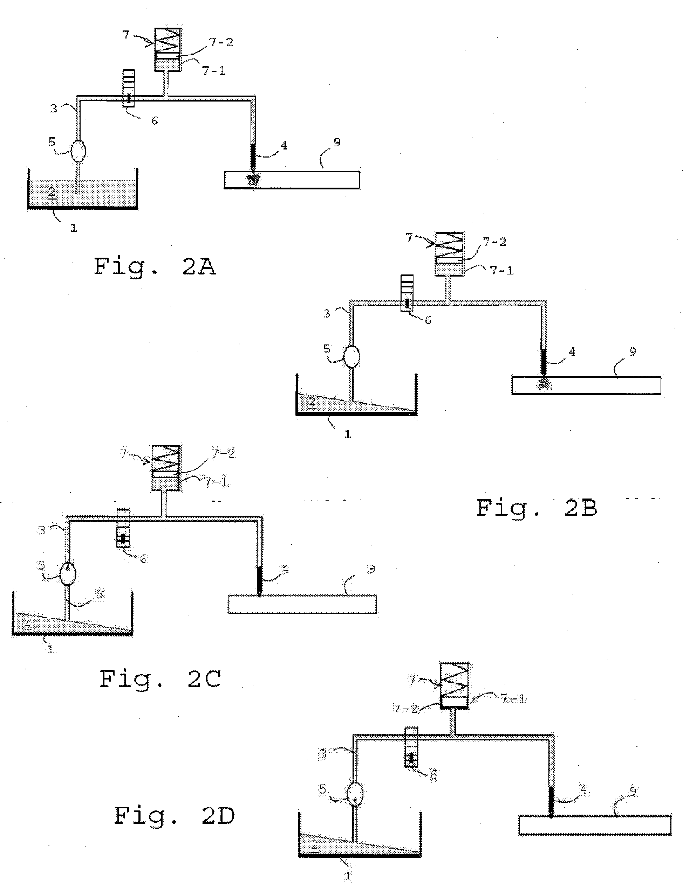

Ainsi que cela est montré notamment dans les figures 2A à 2D, le système d'injection comporte un réservoir 1 de l'additif à l'état liquide 2. Il comporte en outre un circuit hydraulique 3 pour conduire ledit additif à l'état liquide 2, dudit réservoir 1, à un ou plusieurs injecteurs 4 du système d'injection.

Une pompe 5, disposée en aval du réservoir 1, permet de pomper de l'additif à l'état liquide 2 contenu dans ledit réservoir 1, dans le circuit hydraulique 3.

Par ailleurs, une vanne 6 est positionnée le long dudit circuit hydraulique 3. Elle est disposée en amont d'un accumulateur 7 de l'additif à l'état liquide 2 sur ledit circuit hydraulique 3. Le procédé selon la présente invention n'exclut pas un système à fonctionnement équivalent pour remplacer ladite vanne 6. Celle-ci peut être une électrovanne à trois voies. L'accumulateur 7 comporte, d'une part, un réservoir 7-1 et, d'autre part, un piston 7-2. L'additif 2 est accumulé dans le réservoir 7-1 ou expulsé en dehors de celui-ci, dans le circuit 3, en fonction de la course du piston 7-2.

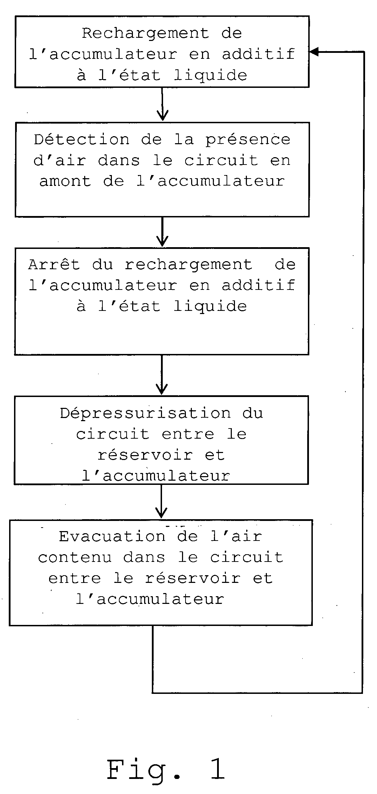

Les étapes du procédé selon l'invention sont présentées à la figure 1 et sont illustrées aux figures 2A à 2D.

La figure 2A montre que, dans des conditions idéales de fonctionnement, la mise sous pression du circuit hydraulique 3 entre la vanne 6, l'accumulateur 7 et l'injecteur 4, permet, à condition que l'injecteur 4 soit ouvert, d'injecter l'additif à l'état liquide 2 accumulé dans l'accumulateur 7, dans le système d'échappement 9.

Dans de telles conditions de fonctionnement idéales, c'est-à-dire dans des conditions de fonctionnement telles que, d'une part, le véhicule est à vitesse constante ou nulle et à l'horizontale et telles que, d'autre part, l'additif à l'état liquide 2 est en quantité suffisante dans le réservoir 1, l'additif 2 peut être pompé dans le réservoir 1 sans que de l'air soit admis.

Ainsi que cela est illustré à la figure 2B, même lorsque les conditions de fonctionnement ne sont pas idéales, par exemple dans le cas où le véhicule accélère/décélère, ou alors, lorsque le véhicule est en pente, ou est soumis à un tangage ou un roulis important, la mise sous pression du circuit hydraulique 3 entre la vanne 6, l'accumulateur 7 et l'injecteur 4 permet, à condition que l'injecteur 4 soit ouvert, d'injecter l'additif 2 accumulé dans l'accumulateur 7, dans le système d'échappement 9.

Par contre, si l'additif 2 contenu dans l'accumulateur 7 n'est plus en quantité suffisante, alors la vanne 6 commute et l'accumulateur 7 doit être rechargé en additif 2.

Pour le rechargement de l'accumulateur 7 en additif à l'état liquide 2, on pompe l'additif à l'état liquide 2 dans le réservoir 2 dans le circuit hydraulique 3. Ce pompage est effectué au moyen de la pompe 5. Cette pompe 5 pompe l'additif 2 dans le réservoir 1. La vanne 6 étant ouverte, l'additif 2 parcourt le circuit 3 et est accumulé dans l'accumulateur 7.

Dans des conditions de fonctionnement qui ne sont pas idéales, de l'air 8 est susceptible d'être aspiré dans le circuit hydraulique 3 lors du rechargement de l'accumulateur 7. Cela est illustré à la figure 2C. La présence d'air 8 dans le circuit 3 est détectée, selon l'invention, en amont de l'accumulateur 7. Cette détection peut être effectuée par analyse de la consommation électrique de la pompe 5. Toutefois, d'autres méthodes de détection sont susceptibles d'être mises en oeuvre. Par exemple, on pourra selon l'invention, utiliser un débitmètre électromagnétique ou à ultrasons (effet Doppler ou mesure par temps transit), ou à tube de Venturi ou encore à effet Vortex.

Dans le cas où la présence d'air 8 est détectée, on arrête, selon l'invention, le rechargement de l'accumulateur 7.

Dans une étape ultérieure, on évacue l'air 8 contenu dans le circuit hydraulique 3 en créant une dépression dans circuit hydraulique 3, entre le réservoir 1 et l'accumulateur 7. A cet effet, et ainsi que cela est illustré en figure 2D, on ferme le ou les injecteurs 4 et on ouvre la vanne 6 entre l'accumulateur 7 et le réservoir 1. L'étape d'évacuation de l'air 8 contenu dans ledit circuit hydraulique 3 entre le réservoir 1 et l'accumulateur 7 est effectuée par substitution de l'air 8 par l'additif à l'état liquide contenu dans l'accumulateur 7 et en amont de l'air 8.

La position du piston 7-2 de l'accumulateur 7 est avantageusement évaluée par des capteurs de position de dudit piston 7-2 de l'accumulateur 7. Dans la position dite maximale, l'accumulateur 7 est totalement chargé en additif. Dans la position dite minimale, l'accumulateur doit être rechargé en additif. Néanmoins, même dans cette position minimale, il existe un volume d'additif encore présent dans le réservoir 7-1 de l'accumulateur 7. Ce volume encore présent est le volume mort. En définitive, le volume mort est le volume dudit additif à l'état liquide 2 présent dans ledit accumulateur 7 lors d'une demande de rechargement de celui-ci.

Selon l'invention, on utilise l'additif contenu dans ce volume mort pour chasser l'air 8 qui est aspiré dans ledit circuit hydraulique 3.

Le système peut comporter un calculateur qui calcule le volume d'additif 2 contenu dans le volume mort de l'accumulateur 7 et celui suffisant pour chasser l'air 8 du circuit hydraulique 3.

Ainsi que cela est représenté à la figure 2D, une fois que l'air 8 a été chassé du circuit hydraulique 3 par substitution par ledit additif à l'état liquide 2 une étape de rechargement de l'accumulateur 7 peut être effectuée.

Cette étape de rechargement peut être effectuée, en particulier, dans une ou des conditions de dynamique du véhicule favorables au rechargement. Une condition de dynamique du véhicule favorable au rechargement est une vitesse constante de déplacement de celui par rapport au sol, plus particulièrement une vitesse nulle.

Une répétition à plusieurs reprises successives du présent procédé de la figure 1 signifierait dans des conditions de dynamique favorables au rechargement dudit accumulateur 7 en additif à l'état liquide 2 que ledit additif à l'état liquide 2, qui n'est pas en quantité suffisante dans ledit réservoir 1 pour le rechargement.

## Revendications

1. Procédé de réamorçage d'un système d'injection d'un additif à l'état liquide dans un système d'échappement d'un véhicule automobile à moteur thermique, ledit système d'injection comportant
un réservoir (1) de l'additif à l'état liquide (2),
un circuit hydraulique (3) pour conduire ledit additif à l'état liquide (2), dudit réservoir (1), à un ou plusieurs injecteurs (4) du système d'injection,
une pompe (5) pour le pompage de l'additif à l'état liquide (2) contenu dans ledit réservoir (1), dans ledit circuit hydraulique (3),
une vanne (6) positionnée sur ledit circuit hydraulique (3), et
un accumulateur (7) dudit additif à l'état liquide (2) sur ledit circuit hydraulique(3),
**caractérisé en ce qu'**il comprend des étapes de :
rechargement de l'accumulateur (7) en additif à l'état liquide (2) ;
détection de la présence d'air (8) dans le circuit hydraulique (3) en amont de l'accumulateur (7) ;
arrêt du rechargement de l'accumulateur (7) en additif à l'état liquide (2) ;
dépressurisation du circuit hydraulique (3) entre le réservoir (1) et l'accumulateur (7) ; et de
évacuation de l'air (8) contenu dans le circuit hydraulique (3) entre le réservoir (1) et l'accumulateur (7);
reprise dudit rechargement.

2. Procédé selon la revendication 1, **caractérisé en ce que** l'additif à l'état liquide (2) comprend de l'urée.

3. Procédé selon l'une des revendications 1 ou 2, **caractérisé en ce que**, pour la détection de la présence d'air (8), on analyse la consommation électrique de la pompe (5).

4. Procédé selon l'une des revendications 1, 2 ou 3, **caractérisé en ce que**, pour la dépressurisation du circuit hydraulique (3), on ferme le ou les injecteurs (4), et on ouvre la vanne (6).

5. Procédé selon l'une des revendications précédentes, **caractérisé en ce que** l'accumulateur (7) présente un volume mort comportant de l'additif à l'état liquide (2) et **en ce que** ledit procédé comprend en outre une étape de substitution de l'air (8) contenu dans le circuit hydraulique (3) en amont de l'accumulateur (7) par l'additif à l'état liquide (2) contenu dans ledit volume mort et/ou l'additif à l'état liquide contenu dans le circuit hydraulique en amont de l'accumulateur (7).

6. Procédé selon l'une des revendications précédentes, **caractérisé en ce que** le système d'injection comporte en outre un capteur de position qui évalue la position d'un piston (7-2) de l'accumulateur et commande les rechargements dudit accumulateur (7) lorsque le piston (7-2) est en position basse.

7. Procédé selon l'une des revendications précédentes, **caractérisé en ce que** le système d'injection comporte en outre un calculateur qui calcule le volume d'additif contenu dans le volume mort de l'accumulateur (7) suffisant pour chasser l'air (8) du circuit hydraulique (3).

8. Procédé selon l'une quelconque des revendications précédentes, **caractérisé en ce que**, postérieurement à l'évacuation de l'air (8) contenu dans le circuit hydraulique (3) entre le réservoir (1) et l'accumulateur (7), on recharge ledit accumulateur (7).

9. Procédé selon la revendication 8, **caractérisé en ce que** le rechargement de l'accumulateur (7) est effectué lors d'une dynamique de véhicule favorable au rechargement.

10. Procédé selon l'une quelconque des revendications précédentes, **caractérisé en ce que** :
la répétition à plusieurs reprises successives dudit procédé permet de déduire une information sur le volume utile dudit additif à l'état liquide (2) dans le réservoir (1), qui n'est pas en quantité suffisante dans le réservoir (1) pour le rechargement.

## Patentansprüche

1. Verfahren zum Wiederansaugen eines Systems zur Einspritzung eines Zusatzmittels in flüssigem Zustand in eine Abgasanlage eines Kraftfahrzeugs mit Brennkraftmaschine, wobei das Einspritzsystem Folgendes umfasst
einen Behälter (1) des Zusatzmittels in flüssigem Zustand (2),
einen hydraulischen Kreislauf (3), um das Zusatzmittel in flüssigem Zustand (2) von dem Behälter (1) zu einer oder mehreren Einspritzdüsen (4) des Einspritzsystems zu leiten,
eine Pumpe (5) zum Pumpen des Zusatzmittels in flüssigem Zustand (2), das in dem Behälter (1) enthalten ist, in den hydraulischen Kreislauf (3),
ein Ventil (6), das auf dem hydraulischen Kreislauf (3) positioniert ist, und
einen Speicher (7) des Zusatzmittels in flüssigem Zustand (2) auf dem hydraulischen Kreislauf (3),
**dadurch gekennzeichnet, dass** es die folgenden Schritte umfasst:
Nachfüllen des Speichers (7) mit Zusatzmittel in flüssigem Zustand (2),
Erfassen der Gegenwart von Luft (8) in dem hydraulischen Kreislauf (3) stromaufwärts des Speichers (7),
Stoppen des Nachfüllens des Speichers (7) mit Zusatzmittel in flüssigem Zustand (2),
Druckmindern des hydraulischen Kreislaufs (3) zwischen dem Behälter (1) und dem Speicher (7), und
Ableiten der Luft (8), die in dem hydraulischen Kreislauf (3) zwischen dem Behälter (1) und dem Speicher (7) enthalten ist,
Wiederaufnahme des Nachfüllens.

2. Verfahren nach Anspruch 1, **dadurch gekennzeichnet, dass** das Zusatzmittel in flüssigem Zustand (2) Harnstoff umfasst.

3. Verfahren nach einem der Ansprüche 1 oder 2, **dadurch gekennzeichnet, dass** man zum Erfassen der Gegenwart von Luft (8) den Stromverbrauch der Pumpe (5) analysiert.

4. Verfahren nach einem der Ansprüche 1, 2 oder 3, **dadurch gekennzeichnet, dass** man zum Druckmindern des hydraulischen Kreislaufs (3) die Einspritzdüse oder die Einspritzdüsen (4) schließt und das Ventil (6) öffnet.

5. Verfahren nach einem der vorhergehenden Ansprüche, **dadurch gekennzeichnet, dass** der Speicher (7) ein Totvolumen aufweist, das Zusatzmittel in flüssigem Zustand (2) umfasst, und dass das Verfahren außerdem einen Schritt des Ersetzens der Luft (8), die in dem hydraulischen Kreislauf (3) stromaufwärts des Speichers (7) enthalten ist, durch Zusatzmittel in flüssigem Zustand (2), das in dem Totvolumen enthalten ist, und/oder Zusatzmittel in flüssigem Zustand, das in dem hydraulischen Kreislauf stromabwärts des Speichers (7) enthalten ist, umfasst.

6. Verfahren nach einem der vorhergehenden Ansprüche, **dadurch gekennzeichnet, dass** das Einspritzsystem außerdem einen Positionssensor umfasst, der die Position eines Kolbens (7-2) des Speichers beurteilt und die Nachfüllungen des Speichers (7) befiehlt, wenn sich der Kolben (7-2) in Tiefstellung befindet.

7. Verfahren nach einem der vorhergehenden Ansprüche, **dadurch gekennzeichnet, dass** das Einspritzsystem außerdem einen Rechner umfasst, der das Zusatzmittelvolumen, das in dem Totvolumen des Speichers (7) enthalten ist, das ausreicht, um die Luft (8) aus dem hydraulischen Kreislauf (3) auszutreiben, berechnet.

8. Verfahren nach einem der vorhergehenden Ansprüche, **dadurch gekennzeichnet, dass** man nach dem Ableiten der Luft (8), die in dem hydraulischen Kreislauf (3) zwischen dem Behälter (1) und dem Speicher (7) enthalten ist, den Speicher (7) nachfüllt.

9. Verfahren nach Anspruch 8, **dadurch gekennzeichnet, dass** das Nachfüllen des Speichers (7) bei einer für das Nachfüllen günstigen Fahrzeugdynamik ausgeführt wird.

10. Verfahren nach einem der vorhergehenden Ansprüche, **dadurch gekennzeichnet, dass**:
es die mehrmalige Wiederholung nacheinander des Verfahrens erlaubt, eine Information über das Nutzvolumen des Zusatzmittels in flüssigem Zustand (2) in dem Behälter (1), das im Behälter (1) nicht in ausreichender Menge zum Nachfüllen vorliegt, abzuleiten.

## Claims

1. A method for repriming a system for injecting a liquid additive in an exhaust system of a motor vehicle having a heat engine, said injection system comprising
a tank (1) for the liquid additive (2),
a hydraulic circuit (3) for conveying said liquid additive (2), from said tank (1), to one or more injectors (4) of the injection system,
a pump (5) for pumping the liquid additive (2) contained in said tank (1), in said hydraulic circuit (3),
a valve (6) positioned on said hydraulic circuit (3), and
an accumulator (7) of said liquid additive (2) on said hydraulic circuit (3),
**characterized in that** it includes steps of:
refilling the accumulator (7) with liquid additive (2) ;
detecting the presence of air (8) in the hydraulic circuit (3) upstream from the accumulator (7);
stopping the refill of liquid additive (2) into the accumulator (7);
depressurizing the hydraulic circuit (3) between the tank (1) and the accumulator (7); and of
discharging the air (8) contained in the hydraulic circuit (3) between the tank (1) and the accumulator (7) ;
repeat of said refilling.

2. The method according to Claim 1, **characterized in that** the liquid additive (2) includes urea.

3. The method according to one of Claims 1 or 2, **characterized in that**, for the detection of the presence of air (8), the electric consumption of the pump (5) is analysed.

4. The method according to one of Claims 1, 2 or 3, **characterized in that** for the depressurizing of the hydraulic circuit (3), the injector or injectors (4) are closed, and the valve (6) is opened.

5. The method according to one of the preceding claims, **characterized in that** the accumulator (7) has a dead volume comprising liquid additive (2) and **in that** said method further includes a step of substitution of the air (8) contained in the hydraulic circuit (3) upstream from the accumulator (7) by the liquid additive (2) contained in said dead volume and/or the liquid additive contained in the hydraulic circuit upstream from the accumulator (7).

6. The method according to one of the preceding claims, **characterized in that** the injection system further comprises a position sensor which evaluates the position of a piston (7-2) of the accumulator and controls the refillings of said accumulator (7) when the piston (7-2) is in low position.

7. The method according to one of the preceding claims, **characterized in that** the injection system further comprises a computer which calculates the volume of additive contained in the dead volume of the accumulator (7) sufficient to expel the air (8) of the hydraulic circuit (3).

8. The method according to any one of the preceding claims, **characterized in that**, after the evacuation of the air (8) contained in the hydraulic circuit (3) between the tank (1) and the accumulator (7), said accumulator (7) is refilled.

9. The method according to Claim 8, **characterized in that** the refilling of the accumulator (7) is carried out during vehicle dynamics favourable to refilling.

10. The method according to any one of the preceding claims,
**characterized in that**
the repetition with several successive repeats of said method permits information to be deduced concerning the effective volume of said liquid additive (2) in the tank (1), which is not of a sufficient quantity in the tank (1) for the refilling.
